# EUROPÄISCHE PATENTANMELDUNG

(11) **EP 4 388 943 A1**
(43) Veröffentlichungstag der Anmeldung: **26.06.2024**
(21) Anmeldenummer: 23217160.3
(22) Anmeldetag: 15.12.2023
(51) Int. Cl.: A47C 31/00, A01K 1/035, A47D 15/00

(54) **BETTBEGRENZUNG, INSBESONDERE KRIPPENEINLAGE FÜR EIN KINDERBETT**

(30) Priorität: 19.12.2022 AT 5018622 U; 07.07.2023 AT 5011423 U
(71) Anmelder: Agentur Riener GmbH, 3051 St. Christophen (AT)
(72) Erfinder: Riener, Franz, 3033 Altlengbach (AT)
(74) Vertreter: Schwarz & Partner Patentanwälte GmbH

(57) **Zusammenfassung**

Bettbegrenzung, insbesondere Krippeneinlage (1; 1') für ein Kinderbett für das Schützen eines Kinderkopfes, umfassend gepolsterte Berandungsteile (2, 3, 4), wobei die Berandungsteile (2, 3, 4) im Wesentlichen in einer U-förmigen Konfiguration angeordnet sind, wobei zumindest eine Tasche (5), mit zumindest einer Taschenöffnung (6), an zumindest einem der Berandungsteilen (2, 3, 4) angeordnet ist, wobei die Tasche (5) dazu ausgebildet ist, Duftstoffträgermaterial (I) aufzunehmen und Duft vom Duftstoffträgermaterial (I) abzugeben.

## Beschreibung

Die Erfindung betrifft eine Bettbegrenzung, insbesondere eine Krippeneinlage für ein Kinderbett für das Schützen eines Kinderkopfes, umfassend gepolsterte Berandungsteile, wobei die Berandungsteile im Wesentlichen in einer U-förmigen Konfiguration angeordnet sind. Ein Beispiel für eine Krippeneinlage gemäß dem Stand der Technik ist der DE 299 16 464 U1 zu entnehmen.

Es ist bekannt, dass guter Schlaf einer der wichtigsten Faktoren für eine gute Gesundheit ist. Allgemein anerkanntes Wissen ist zudem, dass der Geruchssinn auch den Schlaf beeinflusst. Beispielsweise kann eine Aromatherapie mit bestimmten Düften einen besseren Schlaf fördern, das Aufwachen am Morgen erleichtern und sogar zu positiveren Träumen anregen.

Da erholsamer Schlaf für Babys und Kindern einen wesentlichen Einfluss auf deren weitere Entwicklung hat, gilt es besonders, für diese Gruppe Methoden zu finden, deren Schlaf positiv zu beeinflussen.

Unter bekannte Methoden zur Abgabe von Duft an Schlafende in einem Raum als Aromatherapie fällt die indirekte Inhalationsmethode, bei der Duftstoffe mit Luft vermischt werden. Normalerweise wird mit Duft angereichertes Öl in einer Diffusoreinheit erhitzt, um zu verdampfen und in weiterer Folge im Raum verteilt zu werden. Die Beheizung erfolgt in der Regel durch Wärmequellen wie Kerzen oder elektrische Heizelemente. Dabei nachteilig ist jedoch, dass Wärmequellen eine Gefahrenquelle darstellen, besonders für Babys und Kinder, weswegen derartige Methoden nicht für diese eingesetzt werden können.

Ein Beispiel für ein derartig ungeeignetes elektrisch erhitzbares Diffusorgerät aus dem Stand der Technik ist in der DE 202016104898 U1 offenbart.

Alternativ könnten beispielsweise Zierpolster z.B. mit Kräutern wie Lavendel oder Kamille befüllt und in das Kinderbett gelegt werden. Dies hat jedoch wiederum den Nachteil, dass diese Zierpolster lose im Bett herumliegen und dadurch keine vordefinierte Position im Bett gegeben ist. Die Kinder können derartige Zierpolster beispielsweise während dem Schlaf zum Fußbereich verschieben oder diese auch aus dem Bett herausschmeißen. Ein weiteres Problem ist, dass derartige Zierpolster zu stark befüllt werden könnten, was der Schlafqualität sogar abträglich sein könnte.

Es ist die daher die Aufgabe der Erfindung eine Vorrichtung bereitzustellen, welche die genannten Nachtteile überwindet. Primär soll eine Krippeneinlage bereitgestellt werden, die dazu geeignet ist, eine gut dosierbare Aromatherapie für schlafende Babys und Kinder in einer ungefährlichen Art und Weise bereitzustellen.

Erfindungsgemäß wird die vorliegende Aufgabe dadurch gelöst, dass die Bettbegrenzung zumindest eine in einem der Berandungsteile angeordnete Tasche zur Aufnahme eines Duftstoffträgermaterials umfasst, wobei das Duftstoffträgermaterial bevorzugt ein schlafförderndes Duftstoffträgermaterial ist, insbesondere Kamille, Lavendel oder Zirbe, wobei das Berandungsteil eine an einer Außenseite des Berandungsteils angeordnete Taschenaußenwand zur Abgabe eines Duftes des Duftstoffträgermaterial nach außen aufweist. Die Taschenaußenwand kann somit die Tasche mit der Außenseite des Berandungsteils verbinden und zum Zwecke der Duftabgabe permeabel oder semipermeabel ausgebildet sein. Als Duftstoffträgermaterial können im Allgemeinen auch andere ätherische Öle umfassende Stoffe wie Holzspäne aus verschiedenen Holzarten, Blüten, oder auch getrocknete Pflanzen eingesetzt werden.

Die erfindungsgemäße Bettbegrenzung hat den Vorteil, dass einem Kind oder Baby auch während des Schlafs gezielt und ohne das Vorliegen einer Gefahrenquelle Duft zugeführt werden kann. Besonders bei einem unruhigen Schlaf, der in der Regel mit viel Bewegung einhergeht, kann besonders dann Duft durch das damit verbunden Agitieren der Bettbegrenzung bereitgestellt werden. Dies ist darin begründet, dass Duft vom Duftstoffträgermaterial durch Luftstöße oder Bewegung gegen die Bettbegrenzung vermehrt gelöst wird.

Ein großer Vorteil der erfindungsgemäßen Bettbegrenzung ist, dass das Duftstoffträgermaterial aufgrund der erfindungsgemäßen Tasche unabhängig vom Polstermaterial in das Berandungsteil eingebracht und damit gewechselt werden kann. In anderen Worten kann die Polsterung im Berandungsteil verbleiben, während der Inhalt der Tasche ausgetauscht wird. Wurde keine Tasche vorliegen und beispielsweise Duftstoffträgermaterial mit der Polsterung vermischt werden, müsste der Benutzer die gesamte Polsterung entfernen, um eine Abgabe des Duftstoffes zu unterbinden, was jedoch aus Sicht des Benutzers wenig Sinn macht.

Besonders ist bei der erfindungsgemäßen Lösung zudem, dass sie sich insbesondere als Krippeneinlage eignet, da sich die Taschen durch einfaches Einlegen der Krippeneinlage in das Kinderbett in einer wohldefinierten Position im Kinderbett befinden. Da auch die durchschnittliche Lage des Kinderkopfes bekannt ist, kann durch Wählen der Menge des Duftstoffträgermaterial in der Tasche eine genaue Dosierung des schlaffördernden Mittels vorgegeben werden. In anderen Worten kann der Duft bzw. das schlaffördernde Mittel dem Kind konstanter zugeführt werden, als dies im Stand der Technik möglich wäre. Weiters bevorzugt sind die Taschen bereits mit einer Maximalgröße ausgebildet, die eine Überdosierung des schlaffördernden Mittels verhindern. Da die Taschen in der Regel eine flächige Form aufweisen, beträgt die Größe der Tasche z.B. maximal 300cm², maximal 200cm², maximal 100 cm², maximal 50cm², maximal 20cm² oder maximal 10 cm². Ein Beispiel für Dimensionierung der Tasche ist z.B. eine Größe vom 10cm x 20cm. Die Taschenaußenwand kann dieselbe Größe aufweisen, wobei diese auch wesentlich kleiner ausfallen kann, z.B. um die Duftabgabe zu reduzieren. Die Größe der Tasche bzw. der Taschenaußenwand ist bei der erfindungsgemäßen Lösung somit fest vorgegeben, wodurch bereits herstellerseitig ein Schutz vor einer Überbeduftung vorgegeben ist.

Unter Krippeneinlage, bzw. Nestchen, Babyschlange, Bettschlange, Kinderschlafschlange, wird im Allgemeinen ein Schutzpolster verstanden, der an einer Innenseite verlaufend in einem Kopfbereich von Kinderbetten, oder Wiegen eingelegt wird, um Schlupflöcher zu verschließen, oder Verletzungen vorzubeugen. Derartige Krippeneinlagen bilden üblicherweise eine U-förmige Konfiguration aus, wobei die Innenseite der U-förmigen Konfiguration zum Inneren des Kinderbetts gerichtet ist und den Kopfbereich U-förmig umschließt. Die Außenseite der U-förmigen Konfiguration liegt zwar üblicherweise auch innerhalb des Kinderbetts, ist jedoch nach außen gerichtet, z.B. zu den Gitterstäben des Kinderbetts. Die Taschenaußenwand ist nun bevorzugt auf der Innenseite der U-förmigen Konfiguration angeordnet, sodass Duft gezielt zum Kopfbereich des Kinderbetts abgegeben wird. Um einen unnötigen Austritt von Duft zu verhindern, kann das Berandungsteil auf der der Taschenaußenwand abgewandten Seite der Tasche luftundurchlässig sein. Auf dieser abgewandten Seite der Taschenaußenwand kann beispielsweise ein Schaumstoff oder eine andere Polsterung vorgesehen sein. Die Tasche kann gegenüber dem Schaumstoff oder der Polsterung eine zusätzliche luftundurchlässige Dichtung wie eine Kunststofffolie aufweisen, sodass die Tasche auf der einen Seite über die undurchlässige Dichtung und auf der anderen Seite durch die Taschenaußenwand begrenzt sein kann.

Besonders bevorzugt umfasst die Bettbegrenzung eine Zwischenwand, welche den Innenraum der Tasche vom restlichen Innenraum der Berandungsteile abtrennt, insbesondere von einer Polsterung der Berandungsteile. Dadurch kann der in der Tasche aufgenommene Duftstoff vorrangig durch die Taschenaußenseite aus der Tasche entweichen und es kann insbesondere nicht dazu kommen, dass der Duftstoff in eine Polsterung der Berandungsteile eindringt, was erstens den Nachteil hätte, dass die Dosierung schlechter eingestellt werden kann (da z.B. die Hälfte des Duftstoffes in die Polsterung eindringen würde und nur die andere Hälfte nach außen abgegeben wird). Zweitens kann der Duftstoff auch leichter gewechselt werden, da es nicht vorkommen kann, dass das Duftstoffträgermaterial oder der Duftbeutel in die Polsterung eindringt, z.B. wenn die Polsterung lose Wolle ist.

Die Berandungsteile sind üblicherweise plattenförmige Elemente und können aus Schaumstoff bestehen, wobei im Schaumstoff Einschnitte als Taschen ausgebildet sein können. Auch können die Berandungsteile intern aus Holz bestehen, bevorzugt Zirbenholz, wobei dennoch eine Polsterung darüber vorgesehen sein kann, damit sich Kinder und Babys nicht verletzen können. Die Polsterung kann zusätzlich mit Stoff überspannt werden, der abnehmbar ausgebildet sein kann, um diesen zu waschen. Um die U-förmige Konfiguration auszubilden, können beispielsweise drei gegeneinander faltbare plattenartige Berandungsteile vorgesehen sein.

Die Berandungsteile können allerdings auch jeweils längliche Polster sein und bevorzugt können diese einen im Wesentlichen kreisförmigen, ovalen, dreieckigen oder rechteckigen Querschnitt aufweisen. Dabei kann die Bettbegrenzung schlangenartig ausgebildet sein und kann kontinuierlich gebogen und gefaltet werden, um die U-förmige Konfiguration bereitzustellen. Dabei ist eine solche Bettbegrenzung nicht auf die U-förmige Konfiguration beschränkt. Beispielsweise kann die Bettbegrenzung zu einer Spirale gerollt werden, oder N-förmig gefaltet werden, um neben der Funktion des Schützen eines Kinderkopfes auch eine Funktion als Sitzpolster, oder Liegefläche erhaltbar ist. Derartige Bettbegrenzungen sind auch als Nestchenschlangen bekannt.

Um eine besonders vorteilhafte Duftabgabe zu ermöglichen, kann die Taschenaußenwand als Netz ausgebildet sein. Die Öffnungen, die durch das Netz ausgebildet sein können, haben beispielsweise eine Mindestgröße von 0,01 mm², von 0,05 mm², von 0, 1 mm² oder von 1 mm². Die Öffnungen des Netzes können alternativ oder zusätzlich eine Maximalgröße von 0,01mm², von 0,05mm², von 0, 1 mm² oder von 1mm² aufweisen.

Weiters können zumindest zwei, bevorzugt alle der Berandungsteile eine Tasche oder zwei Taschen mit zugehöriger Taschenaußenwand aufweisen. Bevorzugt sind jeweils zwei Taschen in jedem der Berandungsteile angeordnet. Dies hat den Vorteil, dass die Position des eingebrachten Duftstoffträgermaterials auswählbar ist. Wenn beispielsweise bekannt ist, dass sich das Kind nachts immer zum rechten Berandungsteil dreht, kann das Duftstoffträgermaterial gezielt in dieses Berandungsteil eingebracht werden. Die Schlafförderung kann somit gezielter durchgeführt werden, als dies im Stand der Technik möglich wäre.

Wie bereits oben erläutert, bietet die vorgegebene Größe der Tasche bereits einen Schutz vor einer Überdosierung. Eine noch genauere Dosierung lässt sich jedoch erzielen, wenn Duftbeutel eingesetzt werden, in denen das Duftstoffträgermaterial eingebracht ist. Der Duftbeutel kann herstellerseitig hergestellt und dem Benutzer zur Verfügung gestellt werden, sodass der Hersteller bereits die genauere Dosierung des Duftstoffträgermaterials vornehmen kann.

Üblicherweise sind die Duftbeutel selbst öffenbar und verschließbar, z.B. mittels eines Reißverschlusses, sodass der Benutzer selbst Duftstoffträgermaterial in den Duftbeutel füllen und diesen danach in die Tasche einbringen kann. Dies hat insbesondere den Vorteil, dass die Tasche besonders sauber gehalten werden kann. Der Duftbeutel ist hierbei üblicherweise aus einem luftdurchlässigem Textil ausgestaltet.

In anderen Varianten kann der Hersteller eine vorbestimmte Menge an Duftstoffträgermaterial permanent in dem Duftbeutel einschließen, z.B. indem der Duftbeutel rundum vernäht wird. Dies ist insbesondere dann von Vorteil, wenn die Bettbegrenzung mehrere Taschen aufweist. Der Hersteller kann dann z.B. vorgeben, dass für den normalen Gebrauch nur ein Duftbeutel eingesetzt werden soll und bei einer Verkühlung z.B. zwei oder mehr Duftbeutel in die Tasche/n einbringen kann. Alternativ oder zusätzlich könnte der Hersteller auch Duftbeutel mit unterschiedlichen Dosierungen bereitstellen.

Die Duftbeutel bieten insbesondere den Vorteil, dass die Taschen nicht verschmutzt werden und die Reinigung daher einfacher ist. Die Duftbeutel sind daher auch dann vorteilhaft, wenn diese nachfüllbar ausgestaltet sind.

Weiters bevorzugt ist der Duftbeutel durch zwei einseitig öffenbare (oder auch rundum verschließbare, bevorzugt vernähte) flächige Textile ausgebildet ist, wobei weiters bevorzugt beide Textile luftdurchlässig sind. In einer anderen Variante kann ein Textil luftundurchlässig und das andere luftdurchlässig ist, sodass eine Duftabgabe durch Richten des luftundurchlässigen Textils zur Taschenaußenwand unterbunden werden kann. Die Duftbeutel können damit weiterhin in den Taschen untergebracht werden, selbst wenn diese nicht benötigt werden. Die zwei Textile könnten auch einfach unterschiedliche Luftdurchlassraten (z.B. Netze mit unterschiedlichen Öffnungsgrößen) aufweisen, sodass eine weitere Dosierung durch Umdrehen der Duftbeutel in der Tasche ermöglicht wird.

Um die Duftabgabe z.B. in der Nacht schnell zu unterbinden, kann die Bettbegrenzung bevorzugt zumindest eine Abdeckung umfassen, mittels welcher die Taschenaußenwand zumindest teilweise abdeckbar ist, wobei die Abdeckung beispielsweise mit einem Ende permanent neben der Taschenaußenwand am Befestigungsteil verbunden ist. Die Krippenabdeckung muss daher nicht aus dem Kinderbett herausgenommen werden, um die Duftabgabe auszusetzen oder anders zu dosieren. Insbesondere könnte die Abdeckung die Taschenaußenwand auch nur teilweise verschließen können, um die Duftabgabe dosieren zu können. Als Abdeckung bietet sich ein bevorzugt luftundurchlässiges Textil an, das mittels Klettverschlusses über der Taschenaußenwand fixiert werden kann.

Weiters kann vorgesehen werden, dass innerhalb eines der Berandungsteile zumindest ein Luftverteilungskanal vorliegt, welcher an einem Ende mit der Tasche und am anderen Ende an einer Stelle der Außenseitseite eines der Berandungsteile vorliegt, die außerhalb der Taschenaußenseite liegt. Wenn die Tasche damit z.B. nur auf einer linken Seite eines Berandungsteils vorliegt, könnte der Luftverteilungskanal den Duft auch zur rechten Seite verbringen. Es könnten auch zwei Taschen verbunden werden, sodass Duft auch zu einer Tasche verbracht werden könnte, in der kein Duftstoffträgermaterial vorliegt.

Bevorzugt ist die Tasche über eine von der Taschenaußenseite gesonderte Taschenöffnung zugänglich. In einer Ausführungsform der Bettbegrenzung kann die Taschenöffnungen an einer Schmalseite des Berandungsteils angeordnet sein. Dies hat den Vorteil, dass die Taschenöffnung schwerer zu erreichen ist, da die Berandungsteile auf der Taschenöffnung aufliegen. Ein Kind die Taschenöffnung somit nicht öffnen, da die Taschenöffnung zwischen Kinderbett und Berandungsteil eingeschlossen ist.

In einer Ausführungsform der Bettbegrenzung kann die Taschenöffnung mittels eines Reißverschlusses öffenbar und verschließbar sein, womit der Vorteil verbunden ist, dass die Bettbegrenzung bewegt werden kann, ohne dabei das Duftstoffträgermaterials zu verlieren.

In einer weiteren Ausführungsform der Bettbegrenzung können die Berandungsteile entlang von deren Kanten abgerundet sein. Dabei vorteilig ist, dass die Bettbegrenzung für Babys, Kinder und Tiere keine spitzen Ecken aufweist, an denen, beispielsweise, Augenverletzungen zugezogen werden könnten.

In einer Ausführungsform der Bettbegrenzung kann eine Rundnut entlang einer Schnittkontur der Berandungsteile ausgebildet sein, wodurch der Vorteil erhalten ist, dass die Bettbegrenzung einfacher gegriffen werden kann, um manipuliert zu werden. Bei gängigen Bettbegrenzung besteht oft die Problematik, dass diese vollständig glatte Berandungsteile aufweisen, die mit einem rutschigen Stoff überspannt sind, sodass diese bei einer Handhabung regelmäßig wegrutschen.

In einer weiteren Ausführungsform der Bettbegrenzung können die Berandungsteile über bzw. entlang der Rundnut faltbar sein. Dadurch kann die Höhe der Bettbegrenzung reduziert werden, wobei dabei allerdings ein besserer Kopfschutz erhalten ist, durch eine erhöhte Polsterdicke. Zudem kann die Bettbegrenzung in weniger Volumen verstaut werden, sollte diese beispielsweise transportiert werden.

In einer Ausführungsform der Bettbegrenzung können die Berandungsteile gegeneinander faltbar sein. Dadurch ist der Vorteil erhalten, dass die Bettbegrenzung in wenig Volumen verstaut werden kann.

Die erfindungsgemäße Bettbegrenzung kann zudem in einem System mit einem Kinderbett vorliegen, wobei die Bettbegrenzung im Kopfbereich des Kinderbetts anordenbar ist.

Alternativ könnte die Bettbegrenzung aber auch als Hundebett (oder auch als Katzenbett oder ähnliches, sodass allgemein von einem Tierbett gesprochen wird) eingesetzt werden, das ähnlich zu einer Kinderkrippe ausgeführt sein kann, wobei jedoch eine der Seitenwände entfallen kann, um das Tierbett für das Tier zugänglich auszubilden. Die Bettbegrenzung kann dabei bevorzugt wieder in einer U-förmigen Konfiguration an den restlichen drei Seitenwänden befestigt werden. Alternativ könnte die Bettbegrenzung selbst eine oder merhere Seitenwände des Tierbetts bilden. Das Tierbett kann neben der genannten Bettbegrenzung auch eine Auflagefläche umfassen, wobei die Bettbegrenzung die Auflagefläche U-förmig oder vollständig umschließt und die Taschenaußenwand zur Auflagefläche gerichtet ist. Der Hund kann somit auf der Auflagefläche liegen und zugleich beduftet werden. Es versteht sich, dass für Tiere andere Duftstoffträgermaterialien als für Kinder eingesetzt werden können, wobei sich bei Tieren aber auch insbesondere beruhigende Duftstoffe anbieten. Für Tierbetten könnten auch andere natürliche Duftstoffträgermaterialien wie Heu eingesetzt werden, um dem Tier den Duft einer natürlichen Umgebung zu bieten.

Vorteilhafte und nicht einschränkende Ausführungsformen der Erfindung werden nachfolgend anhand der Figuren näher erläutert.
Fig. 1 zeigt eine Krippeneinlage in isometrischer Ansicht, sodass eine Unterseite sichtbar ist.
Fig. 2 zeigt die Krippeneinlage der Fig. 1 in einer weiteren isometrischen Ansicht, sodass eine Oberseite sichtbar ist.
Fig. 3 zeigt die Krippeneinlage der Fig. 1 in einer Frontalansicht.
Fig. 4 zeigt die Krippeneinlage der Fig. 1 in einer Unteransicht.
Fig. 5 zeigt die Krippeneinlage der Fig. 1 zusammen mit einem faltbaren Duftbeutel.
Die Figuren 6, 7 und 8 zeigen schematische Schnittansichten der Krippeneinlage im Bereich der Tasche.
Die Figuren 9 und 10 zeigen eine weitere Ausführungsform einer Krippeneinlage in einer Seitenansicht (Figur 9) und einer Vorderansicht (Figur 10).
Fig. 11 zeigt ein Kinderbett umfassend eine erfindungsgemäße Krippeneinlage, die als Nestchenschlange ausgeführt ist.
Fig. 12 zeigt die Krippeneinlage der Fig. 11 in einer N-förmigen Konfiguration und weiteren optionalen Ausführungen.
Fig. 13 zeigt die Krippeneinlage der Fig. 11 und Fig. 12 zu einer Spirale zusammengerollt.
Fig. 14 zeigt einen schematischen Querschnitt einer Krippeneinlage in einer ersten Variante.
Fig. 15 zeigt einen schematischen Querschnitt einer Krippeneinlage in einer zweiten Variante.
Fig. 16 zeigt eine Schnittansicht einer weiteren Ausführungsform einer Krippeneinlage, die als Nestchenschlange ausgeführt ist.

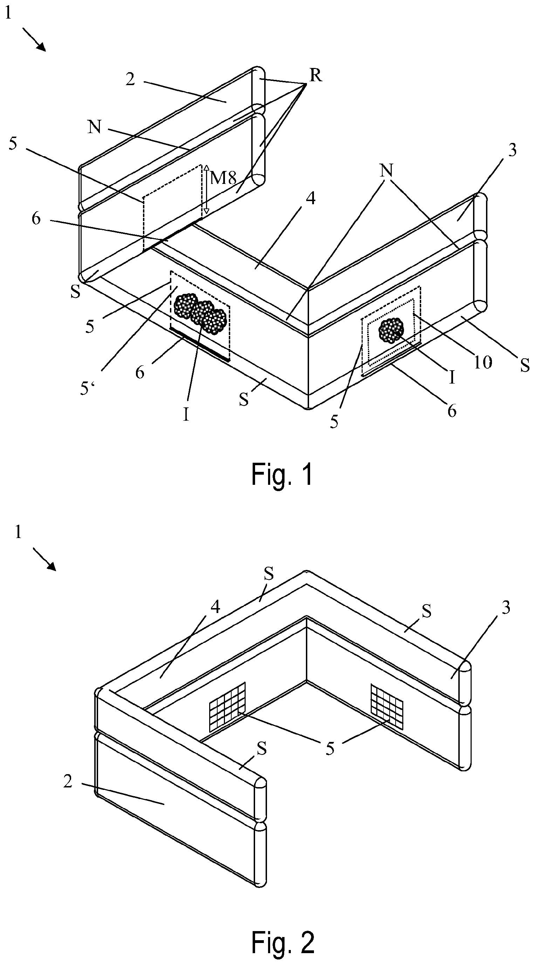

Fig. 1 zeigt eine Krippeneinlage 1 für ein Kinderbett für das Schützen eines Kinderkopfes, umfassend drei gepolsterte plattenartige Berandungsteile 2, 3, 4, wobei die Berandungsteile 2, 3, 4 im Wesentlichen in einer U-förmigen Konfiguration angeordnet sind, wobei zumindest eine Tasche 5 mit zumindest einer Taschenöffnung 6, an zumindest einem der Berandungsteile 2, 3, 4 angeordnet ist, wobei die Tasche 5 derart ausgebildet ist, dass in der Tasche 5 aufgenommenes Duftstoffträgermaterial I Duft nach außen (d.h. nach außerhalb der Krippeneinlage 1) abgegeben werden kann.

Die Ausführungsform, die in Fig. 1 gezeigt wird, umfasst zwei gleichartige seitliche Berandungsteile 2, 3, die von einem dritten Berandungsteil 4 verbunden werden, welches länger als die gleichartigen Berandungsteile 2, 3 ist. Die Erfindung ist jedoch nicht auf diese konkrete Ausführung beschränkt. In den drei Berandungsteilen 2, 3, 4 sind an deren Schmalseiten S jeweils mittig verteilt Taschen 5 angeordnet, mit zumindest einer Taschenöffnung 6. Die Taschen 5 können jeweils unterschiedlich tief und weit in deren Ausdehnung ausgebildet sein. Eine bevorzugte Größe einer Tasche 5 ist strichliert dargestellt und beträgt z.B. 10 cm x 20 cm. Es könnten auch mehrere Taschen 5 pro Berandungsteil 2, 3, 4 vorgesehen werden.

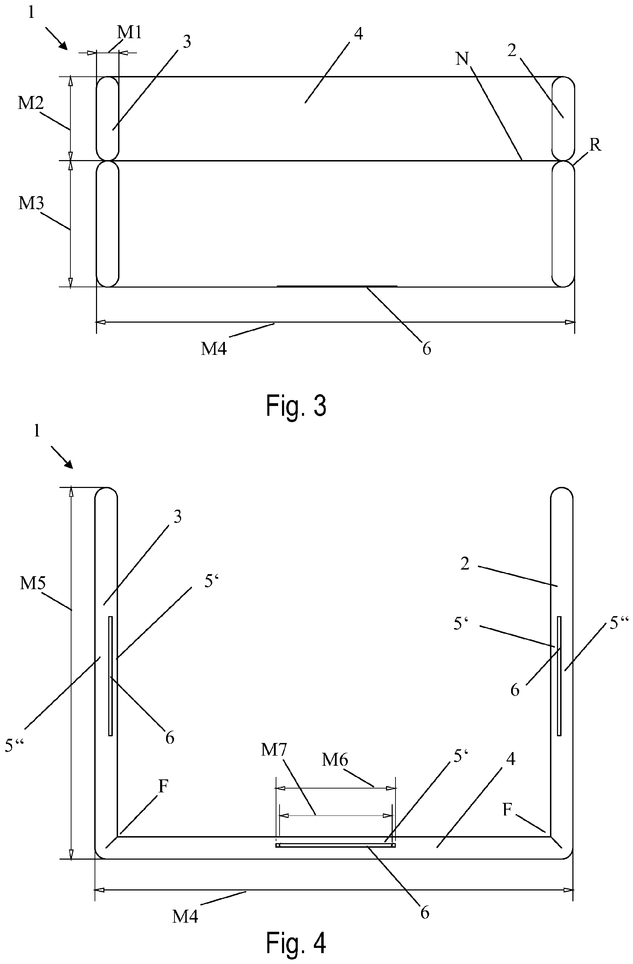

Damit das in den Taschen 5 befindliche Duftstoffträgermaterial I den bevorzugt schlaffördernden Duft in Richtung des Kindes abgeben kann, weist das jeweilige Berandungsteil 2, 3, 4 eine an der Außenseite des Berandungsteils 2, 3, 4 angeordnete Taschenaußenwand 5' (Figur 4) auf, die derart ausgebildet ist, dass in die Tasche 5 eingebrachtes Duftstoffträgermaterial I Duft durch die Taschenaußenwand 5' nach außen abgeben kann. Die Taschenaußenwand 5' verbindet somit die Tasche 5 mit dem Äußeren der Krippeneinlage 1, d.h. mit der die Krippeneinlage 1 umgebenden Luft.

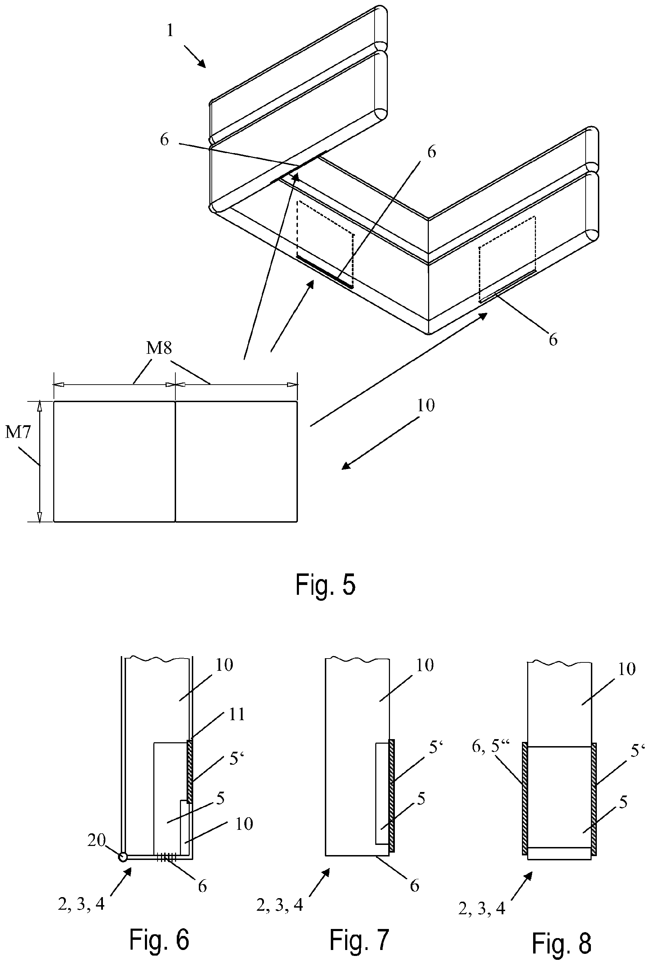

Figur 6 zeigt beispielhaft eine Schnittdarstellung eines Berandungsteils 2, 3, 4 im Bereich einer Tasche 5. Zur Bildung der Tasche 5 kann der Körper 10, der z.B. durch einen Schaumstoffkörper gebildet ist, eine Ausnehmung aufweisen. Zur Verjüngung der Austrittöffnung ist rechts unten ein auskragender Abschnitt des Körpers dargestellt, der jedoch auch entfallen kann. Beispielsweise kann das Berandungsteil 2, 3, 4 einen Körper 10, z.B. eine Polsterung umfassen, der von einer luftundurchlässigen Abdeckung 11 (d.h. einen Überzug) umhüllt sein kann. Die Abdeckung 11 kann eine "zweite" Öffnung 20 aufweisen, über welche die Polsterung (d.h. der Körper) in die Abdeckung einbringbar ist. Lediglich im Bereich der Tasche 5 ist die Abdeckung 11 luftdurchlässig ausgebildet. Dieser Bereich wird als Taschenaußenwand 5' bezeichnet. Die Taschenaußenwand 5' kann z.B. als Netz ausgebildet sein oder es können zur Ausbildung der Taschenaußenwand 5' Schlitze in die Außenabdeckung 11 eingebracht werden.

In wieder anderen Ausführungsformen kann die ganze Abdeckung 11 luftdurchlässig sein, wobei der größte Teil des Duftstoffs weiterhin nur im Bereich der Austrittsöffnung durch die Abdeckung aus der Tasche 5 austreten wird, sodass dieser Bereich der Abdeckung allgemein als Taschenaußenwand 5' bezeichnet wird. Die Ausführungsform mit Abdeckung, die im Gesamten luftdurchlässig ist, kann z.B. mit einem Körper 10 kombiniert werden, der an sich nicht luftdurchlässig ist, z.B. wenn dieser als Schaumstoffkörper mit geschlossenen Poren ausgestaltet ist. In dieser Ausführungsform ist keine Zwischenwand 5‴ notwendig, welche den Innenraum der Tasche 5 vom Körper 10, d.h. der Polsterung, trennt. Gleichfalls könnte, wenn der Körper 10 z.B. porös ist, eine Zwischenwand 5‴ vorgesehen werden, die den Innenraum der Tasche 5 von der Polsterung trennt (nicht dargestellt). In wieder anderen Ausführungsformen kann gewünscht sein, dass das Berandungsteil 2, 3, 4 zwar vorrangig durch die Taschenaußenwand 5' Duft abgibt, aber auch der Polster insgesamt duftet, was z.B. dadurch erreicht werden kann, dass keine oder eine luftdurchlässige Zwischenwand 5‴ und ein luftdurchlässiger Körper 10 eingesetzt wird.

Auf der Schmalseite (z.B. Unterseite) des plattenförmigen Berandungsteils 2, 3, 4 kann eine von der Taschenaußenwand 5' gesonderte Taschenöffnung 6 vorliegen, die über einen schematisch dargestellten Reißverschluss öffenbar und schließbar sein kann. Über die Taschenöffnung 6 kann das Duftstoffträgermaterial I in die Tasche 5 eingebracht werden. In anderen Varianten könnte die Taschenöffnung 6 auch ein Teil der Taschenaußenwand 5' sein, z.B. wenn diese als ein oder mehrere Schlitze ausgeführt ist.

Figur 7 zeigt eine weiters Ausführungsform, bei der ein einstückiger Körper 10 vorliegt und die Taschenaußenwand 5' als davon gesondertes Element ausgebildet ist, z.B. als Textil, welches beispielsweise mittels Klettverschlusses über einer Ausnehmung des Körpers befestigt werden kann, um die Tasche 5 zu bilden. Die Taschenaußenwand 5' kann somit gleichzeitig als Taschenöffnung 6 dienen. Der Körper 10 könnte hierbei auch eine Abdeckung 11 mit Loch im Bereich der aufzubringenden Taschenaußenwand 5' ausgeführt sein, sodass die als gesondertes Element ausgeführte Taschenaußenwand 5' dieses Loch abdecken kann.

Figur 8 zeigt, dass die Tasche 5 den Körper 10 auch durchsetzen könnte, sodass eine Taschenaußenseite 5' und eine der Taschenaußenseite 5' gegenüberliegende Wand 5" vorliegt. Die Wand 5" könnte öffenbar sei und als Taschenöffnung 6 dienen, über welche das Duftstoffträgermaterial I in die Tasche 5 einbringbar ist. Die Wand 5" kann luftdurchlässig oder luftundurchlässig sein. Die Taschenaußenseite 5' könnte hier auch permanent mit dem Körper verbunden sein. Eine derartige Tasche 5, welche das plattenförmige Berandungselement 2, 3, 4 durchsetzt, ist auch mit einer umhüllenden Abdeckung wie in Figur 6 kombinierbar. In der Wand 5" könnte z.B. auch ein Reißverschluss vorgesehen sein.

Es ist ersichtlich, dass zur Ausbildung der Tasche 5 viele Möglichkeiten vorliegen und die Erfindung nicht auf eine konkrete Variante beschränkt ist.

Auch unter Verweis auf Figur 4 sei hervorgehoben, dass die Taschenaußenwand 5' nicht beidseitig der Tasche 5 vorliegen muss, sondern die luftdurchlässige Taschenaußenwand 5' ist bevorzugt nur auf der innengerichteten Seite des Berandungsteils 2, 3, 4 in der der U-förmigen Konfiguration vorgesehen. Auf der der Taschenaußenwand 5' abgewandten Seite der Tasche 5 könnte das Berandungsteil 2, 3, 4 eine luftundurchlässige Wand 5" ausbilden, die bei den Figuren 6 und 7 durch den Körper 10 gebildet ist. Hier könnte beispielsweise eine Polsterung, ein Schaumstoff oder eine Verstärkung z.B. aus Holz oder Kunststoff vorgesehen sein. Alternativ könnte auch die Wand 5" luftdurchlässig sein, um einen Kamineffekt zu erzeugen, wie im Folgenden beschrieben ist.

Ist die Taschenaußenwand 5' auf der Innenseite der U-förmigen Konfiguration ausgebildet, kann besonders gezielt Duft vom Duftstoffträgermaterial I abgegeben werden. Bedingt durch die Anordnung der Berandungsteile 2, 3, 4 entsteht auch ein besonders starker Kamineffekt, da die Wärme die durch ein Kind, oder Baby beim Schlafen abgegeben wird die Dichte der umliegenden Luft reduziert, wodurch die Luft aufsteigt. Ist das Berandungsteil 2, 3, 4 beidseitig der Tasche 5 luftdurchlässig, d.h. ist auch eine Taschenaußenwand 5' auf der Rückseite der U-förmigen Konfiguration ausgebildet, wird umliegende Luft, besonders außerhalb der U-förmigen angeordnete Berandungsteile 2, 3, 4 durch die Taschen 5 angesaugt, wodurch Duft vom Duftstoffträgermaterial I in Richtung des Kindes oder Babys abgegeben wird.

Die Krippeneinlage der Fig. 1 ist zudem entlang derer Kanten R verrundet. Im speziellen handelt es sich dabei, um vollgerundete Ecken, bzw. Kanten R. Zudem ist eine Rundnut N entlang einer Schnittkontur der Berandungsteile 2, 3, 4 ausgebildet. Vorzugsweise kann jeweiliges Berandungsteil 2, 3, 4 über die Rundnut N gefaltet werden, sodass ein Teil oberhalb der Rundnut N auf dem Teil unterhalb der Rundnut N zu liegen kommt. Zudem können die Berandungsteile 2, 3, 4 auch gegeneinander faltbar sein, sodass diese im Wesentlichen quaderförmig und nicht U-förmig sind.

Es soll auch angemerkt sein, dass die drei dargestellten Taschen 5 auch untereinander verbunden sein können, z.B. mittels Luftverteilungskanälen, um einen verbesserten Luftzug zu erwirken. Auch kann innerhalb eines der Berandungsteile 2, 3, 4 zumindest ein Luftverteilungskanal vorliegen, welcher an einem Ende mit der Tasche 5 und am anderen Ende an einer Stelle der Außenseitseite eines der Berandungsteile vorliegt, die außerhalb der Taschenaußenseite 5' liegt. Beispielsweise kann die eine Tasche 5 wie in Fig. 1 dargestellt mit einer Taschenöffnung 6 an einer der Schmalseiten S ausgebildet sein, und eine weitere Taschenöffnung, welche nicht dargestellt ist, derselben Taschen 5 an einer gegenüberliegenden Schmalseite S eines Berandungsteils 2, 3, 4, wobei ein Luftverteilungskanal zur weiteren Taschenöffnung geführt ist. Dadurch lässt sich ein besonders ausgeprägter Kamineffekt erzielen, da die Wärme und die damit einhergehenden Luftkonvektion, bedingt durch ein schlafendes Baby, bzw. Kind innerhalb der Krippeneinlage 1 durch die Tasche 5 mit zwei Taschenöffnungen 6 begünstigt wird. Dadurch kann schon bei einer kleinen Menge Duftstoffträgermaterial I in den Taschen 5, viel Duft abgegeben werden.

Die Fig. 2 zeigt die Krippeneinlage der Fig. 1 in einer weiteren isometrischen Ansicht, sodass eine Oberseite sichtbar ist. Wohingegen die Fig. 3 die Krippeneinlage der Fig. 1 in einer Frontalansicht zeigt, und die Fig. 4 die Krippeneinlage der Fig. 1 in einer Unteransicht.

In den Fig. 3 und Fig. 4 sind zudem gängige Abmessungen M1, M2, M3, M4, M5, M6, und M7, eingetragen.

Dabei können jeweilige Maße folgenden Werte in Millimeter betragen:
M1 = 30 bis 35, M2 = 120, M3 = 180, M4 = 680, M5 = 530, M6 = 170, und M7 = 160

Die aufgelistet Werte können frei skaliert werden, um eine Krippeneinlage 1 für unterschiedliche große Kinderbetten zu erhalten.

Die Berandungsteile 2, 3, 4 können auch derart faltbar sein, dass die jeweiligen Längsausdehnungen veränderbar sind. So kann die Länge M4 durch Falten der Berandungsteile 2, 3, 4 an deren Kanten F auf die Berandungsteile 2 und 3 umgelagert werden, sodass die Länge M5 abnimmt und der Länge M4 beigefügt wird. Dadurch ist der Vorteil erhalten, dass die Krippeneinlage 1 an unterschiedlich breite Kinderbetten eingepasst werden kann.

Weiters können erfindungsgemäß Duftbeutel 10 eingesetzt werden, in denen das Duftstoffträgermaterial I eingebracht ist, um eine von einem Hersteller vorgegebene Dosierung zu erzielen. Figur 5 zeigt einen Duftbeutel 10 mit zwei faltbaren und gegebenenfalls abtrennbaren Abschnitten, in denen jeweils Duftstoffträgermaterial I eingeschlossen ist. Die Abmessungen M8 und M7 des Duftbeutels 10 können derartig gewählt sein, dass dieses im gefalteten Zustand in die Taschenöffnung 6 eingeschoben worden kann und vollständig in der Tasche 5 aufgenommen ist. Dies hat den Vorteil, dass ein Wechseln des Duftstoffträgermaterials I besonders einfach und schnell erfolgen kann.

Nicht dargestellt ist, dass die Duftbeutel 10 jeweils eine Vorderseite und eine Rückseite aufweisen können, die Duft unterschiedlich stark durchlassen können. Eine der Seiten könnte auch luftundurchlässig sein, um eine Duftabgabe zu unterbinden, wenn der Duftbeutel in der Tasche 5 umgedreht wird. Dies ist jedoch nur optional. In anderen Ausführungsformen könnte der Duftbeutel 10 beidseitig luftdurchlässig sein.

Der vorgenannte Duftbeutel 10, die in Figur 5 ersichtlich ist, ist üblicherweise ein luftdurchlässiges Textil, in dem ein Duftstoffträgermaterial aufnehmbar ist, z.B. ein schlafförderndes Duftstoffträgermaterial, Kamille, Lavendel oder Zirbe. Der Duftbeutel 10 bildet somit wiederum einen Hohlraum aus, in dem das Duftstoffträgermaterial aufnehmbar ist. Der Duftbeutel 10 kann eine öffenbare und verschließbare Öffnung wie einen Reißverschluss, einen Klettverschluss etc. aufweisen, über welchen Duftstoffträgermaterial in den Duftbeutel 10 bzw. in den vom Duftbeutel 10 umschlossenen Hohlraum eingebracht und ausgebracht werden kann.

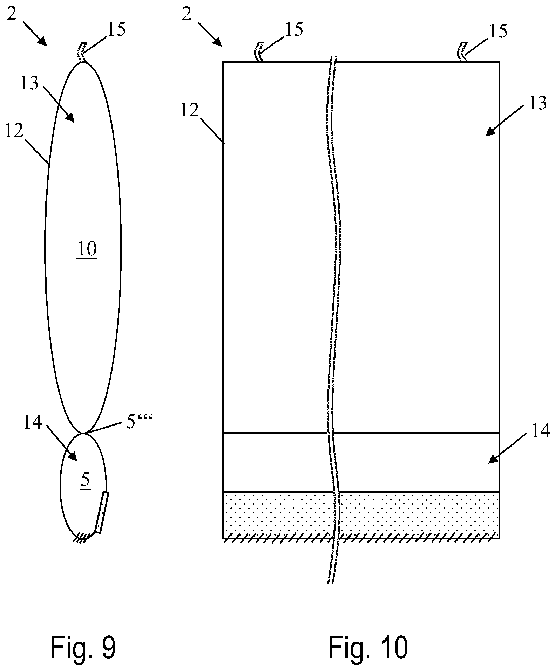

Die Figuren 9 und 10 zeigen eine weitere Ausführungsform eines Berandungsteils 2 mit Tasche 5. Das Berandungsteil 2 kann wieder mit zwei weiteren Berandungsteilen 3, 4 verbunden werden, um eine U-förmige Konfiguration zu erzielen, wie dies oben beschrieben wurde. Dieses Berandungsteil 2 umfasst einen Überzug 12, der eine erste Kammer 13 und eine zweite Kammer 14 ausbildet, und zwar einerseits für den Körper 10, d.h. eine Polsterung und andererseits für die Tasche 5. Die Polsterung liegt üblicherweise permanent im Überzug 12 vor, z.B. indem die erste Kammer 13 vernäht ist, wobei die erste Kammer 13 aber auch öffenbar ausgestaltet sein könnte. Die zweite Kammer 14 bildet die Tasche 5 aus und weist die Taschenöffnung 6 auf, über welche das Duftstoffträgermaterial I, das sich gegebenenfalls im Duftbeutel 10 befindet, im die Tasche 5 eingebracht werden kann. Weiters weist die zweite Kammer 14 die Taschenaußenwand 5' auf, die in der dargestellten Variante ein Netz ausbildet und über im Wesentlichen die Hälfte der Höhe der zweiten Kammer 14 verläuft. Die Tasche 5 und auch die Taschenaußenwand 5' verlaufen wie in Figur 10 gezeigt über die gesamte Länge des Berandungsteils 2, wobei dies optional ist.

Es ist aus Figur 9 gut ersichtlich, dass die erste Kammer 13 und die zweite Kammer 14 voneinander getrennt vorliegen und über eine Zwischenwand 5‴ voneinander getrennt sind. Dadurch kann das Duftstoffträgermaterial I bzw. der Duftbeutel 10 unabhängig von der Polsterung in das Berandungsteil 2 eingeführt werden. Wie ersichtlich ist die Zwischenwand 5‴ durch die gewählte Konstruktion im Wesentlichen linear ausgebildet.

Weiters ist aus den Figuren 9 und 10 ersichtlich, dass das Berandungsteil 2 zwei Befestigungselemente 15 am oberen Ende aufweist. Die Befestigungselemente 15 können dazu eingesetzt werden, um das Berandungsteil 2 an einem oberen Ende (oder an einer anderen Stelle) eines Kinderbettes 100 oder Tierbettes zu befestigen, z.B. wenn das Berandungsteil 2 keine ausreichende Steifigkeit aufweist und daher nicht selbsttragend ist. Die Befestigungselemente 15 aber auch als Sicherungselemente dienen, damit das Berandungsteil 2 nicht auf ein schlafendes Kind (oder Tier, siehe unten) fallen kann. Es können auch nur ein Befestigungselement 15 oder mehr als zwei Befestigungselemente 15 pro Berandungsteil 2 eingesetzt werden. Wenn die Berandungsteile 2 in einer U-förmigen Konfiguration angeordnet werden, können die Befestigungselemente 15 an einem, zwei oder allen Berandungsteilen 2 vorgesehen werden. Die Befestigungselemente 15 können beispielswiese jeweils durch zwei textile Streifen gebildet sein, die verknotet oder mittels eines Klettverschlusses verbunden werden können, um eine Schlaufe zu bilden. Die Befestigungselemente 15 können für alle hierin beschriebenen Berandungsteile 2, 3, 4 eingesetzt werden und sind nicht auf die Ausführungsform der Figuren 9 und 10 beschränkt.

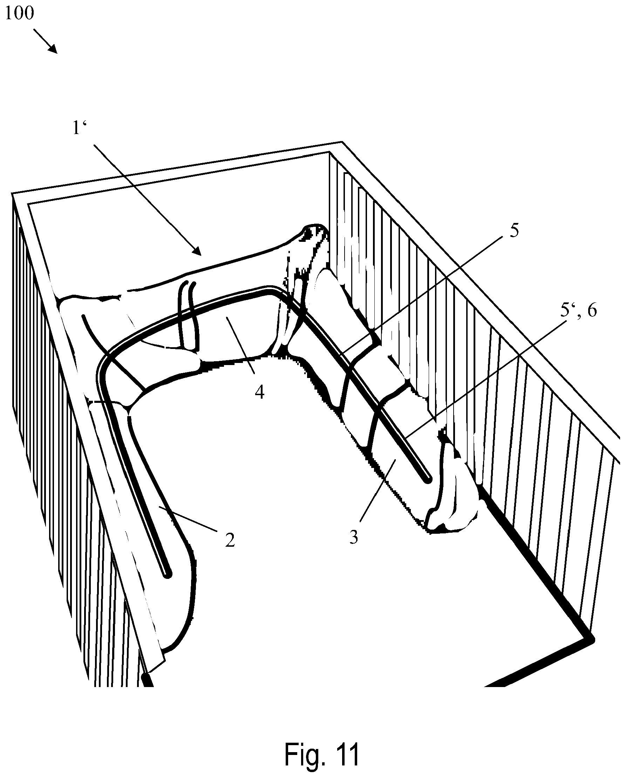

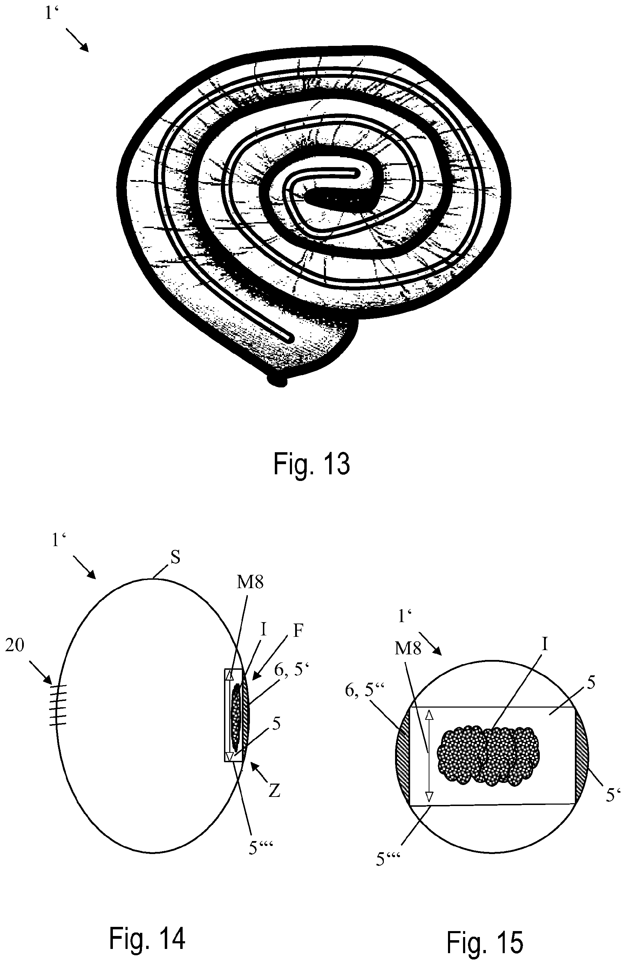

Figur 11 zeigt ein Kinderbett 100 umfassend eine Krippeneinlage 1' zum Schützen eines Kinderkopfes, wobei die Krippeneinlage 1' ein länglicher Polster ist, der auch als Nestchenschlange bekannt ist. Die Krippeneinlage 1' weist Berandungsteile 2, 3, 4 auf, die z.B. jeweils einen im Wesentlichen kreisförmigen Querschnitt aufweisen. Die Krippeneinlage 1' kann U-förmig in einem Kopfbereich des Kinderbetts 100 angeordnet werden, wobei eine Tasche 5, mit zumindest einer Taschenöffnung 6 und Taschenaußenwand 5', durch alle Berandungsteile 2, 3, 4 verläuft (wie unten erläutert, ist dies jedoch optional). Die Tasche 5 ist auch hier derart ausgebildet, dass in der Tasche 5 aufgenommenes Duftstoffträgermaterial I Duft durch die Taschenaußenwand 5' nach außen (d.h. nach außerhalb der Krippeneinlage 1') abgegeben werden kann. Weiters liegt die Tasche 5 gesondert vom Rest des Innenbereichs des länglichen Polsters vor, d.h. der Innenbereich der Tasche 5 kann durch eine Zwischenwand 5‴ von einer Polsterung im jeweiligen Berandungsteil 2, 3, 4 getrennt sein. Üblicherweise weist auch der längliche Polster einen Überzug auf, in dem Polstermaterial aufgenommen ist, und der Innenbereich der Tasche 5 ist vom Polstermaterial durch eine Zwischenwand 5‴ getrennt (Figur 14, 15), die beispielsweise ein am Überzug angenähtes Textil ist (oder im Allgemeinen ein Teil des Überzugs ist) und in der Regel luftundurchlässig ist, aber auch luftdurchlässig sein könnte. Eine derartige textile oder andersartige Zwischenwand 5‴ könnte auch bei plattenförmigen Berandungsteilen 2, 3, 4 wie in den Figuren 1 bis 10 zum Einsatz kommen.

Bei der Ausführungsform von Figur 11 können auch mehrere voneinander beabstandete Taschenöffnungen 6 für dieselbe Tasche 5 ausgebildet sein oder auch mehrere voneinander getrennte Taschen 5 mit jeweiligen Taschenöffnungen 6 und Taschenaußenwänden 5'. Beispielsweise kann in jedem oder nur in einem oder nur in zwei Berandungsteilen 2, 3, 4 eine solche Tasche 5 vorliegen. Es könnte auch z.B. eine lange Tasche 5 vorliegen, die mehrere voneinander gesonderte Taschenaußenwände 5' aufweist. Dadurch kann ein einziges Duftstoffträgermaterial I Duft an mehreren unterschiedlichen Stellen nach außen abgeben.

Unter Berandungsteil 2, 3, 4 in der Ausführungsform der Krippeneinlage 1' soll auch verstanden werden, dass wenn zwei oder drei der Berandungsteile koaxial ausgerichtet sind, also gegeneinander nicht gebogen sind, die Berandungsteile taktil und optisch nicht voneinander unterscheidbar sind, da derart ein uniformer länglicher Polster erhalten ist. Die Berandungsteile 2, 3, 4 können auch zueinander getrennt sein oder jeweils steiferes Material aufweisen, sodass die Berandungsteile 2, 3, 4 auch in deren nicht gebogenen Zustand optisch und/oder taktil voneinander unterscheidbar sind. Es können auch mehr als drei Berandungsteile 2, 3, 4 ausgebildet sein.

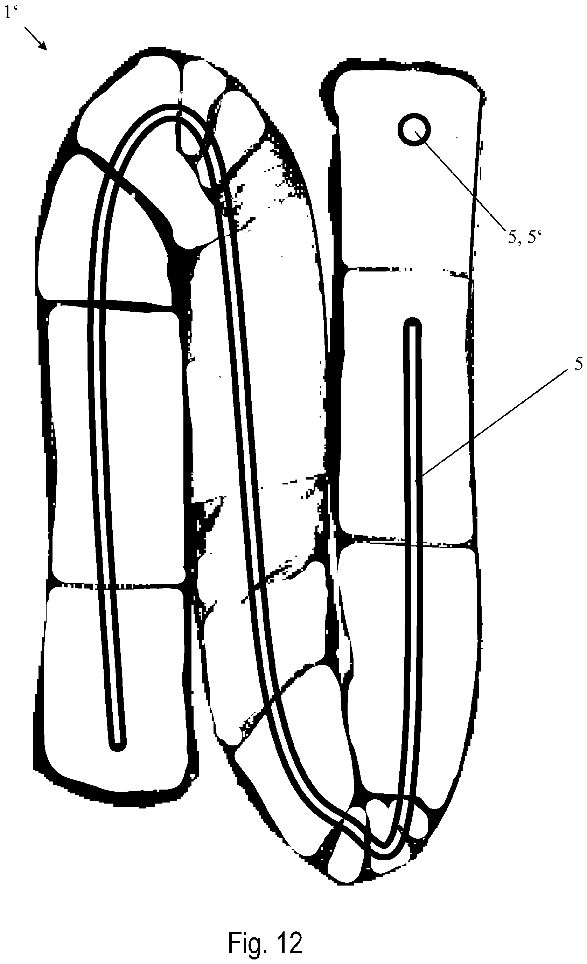

Figur 12 zeigt die Krippeneinlage 1' der Figur 11 in einer N-förmigen Konfiguration, um die Krippeneinlage 1' platzsparend zu verstauen oder um einen Kopfpolster oder eine Liege auszubilden. Dabei soll erwähnt sein, dass die Krippeneinlage 1' an jeder beliebigen Stelle entlang deren Länge abgeknickt werden kann, um beispielsweise auch eine W-förmige Konfiguration zu erhalten und um an unterschiedliche Kinderbetten 100 angepasst zu werden.

In der Ausführungsform von Figur 12 liegen zwei Varianten an Taschen 5 vor. In der ersten Variante, die in Figur 14 im Detail dargestellt ist, verläuft eine Tasche 5 entlang der Länge der Krippeneinlage 1', d.h. die Taschenöffnung 6 verläuft linear entlang des länglichen Polsters über alle (oder auch nur eines oder zwei) Berandungsteile 2, 3, 4. In der zweiten Variante, die in Figur 15 im Detail dargestellt ist, liegt eine Tasche 5 vor, welche den länglichen Polster in einer Richtung normal zur Längsrichtung des länglichen Polsters zumindest teilweise durchsetzt. Die Tasche 5 kann den länglichen Polster beispielsweise vollständig durchsetzen (wobei eine im Wesentlichen zylindrische Zwischenwand 5‴ vorliegt), sodass an beiden Enden der Tasche 5 eine Taschenöffnung 6 vorliegt (bzw. an einem Ende eine öffenbare Taschenöffnung 6 und am anderen Ende eine permanente Abdeckung wie eine Taschenaußenwand 5') oder die Tasche 5 kann als Sackloch ausgeführt sein, sodass nur eine Taschenöffnung 6 vorliegt und der Rest der Tasche durch eine Zwischenwand 5‴ begrenzt ist. Die Taschenaußenwand 5' kann hierbei die Taschenöffnung 6 lösbar verschließen.

In Figur 14 ist weiters eine zweite Öffnung 20 ersichtlich, die schematisch dargestellt ist und z.B. durch einen Reißverschluss gebildet sein kann. Es ist ersichtlich, dass die Zwischenwand 5‴ zwei Bereiche innerhalb des bzw. der Berandungsteile voneinander trennt, und zwar einerseits die Tasche 5und andererseits einen Innenraum zur Aufnahme einer Polsterung. Die Tasche 5 ist nur über die Taschenöffnung 6 zugänglich und der Innenraum zur Aufnahme der Polsterung nur über die zweite Öffnung 20. Dies kann selbstverständlich auch bei den oben beschriebenen plattenförmigen Berandungsteilen 2, 3, 4 umgesetzt werden, z.B. wenn diese eine Abdeckung 11 aufweisen, in die über die Öffnung 20 eine Polsterung wie ein Schaumstoffkörper einführbar ist (siehe z.B. Figur 6).

Eine weitere Konfiguration der Krippeneinlage 1' wird in der Fig. 13 dargestellt. Dabei ist die Krippeneinlage 1' der Figur 11 zu einer Spirale zusammengerollt. In dieser Konfiguration kann die Krippeneinlage 1' z.B. als Liege verwendet werden.

Die Krippeneinlage 1' kann entlang der Länge des länglichen Polsters Seilschlaufen, Seilenden oder Klettverschlüsse aufweisen, sodass die Krippeneinlage 1' in diesen alternativen Konfigurationen lösbar am Kinderbett fixierbar ist.

Figur 14 zeigt einen schematischen Querschnitt einer Krippeneinlage 1' in einer ersten Variante. Der Querschnitt ist dabei elliptisch, wobei durch eine Belastung der Krippeneinlage 1' dieser Querschnitt verformt wird. Dabei kann eine Schmalseite S ausbildet sein. Der Querschnitt könnte aber auch anders ausgeführt werden.

Aus Figur 14 ist weiters ersichtlich, dass eine Tasche 5 analog zu Fig. 7 ausgebildet ist, d.h. im länglichen Polster liegt eine Ausnehmung vor, die eine Taschenöffnung 6 ausbildet und durch eine Taschenaußenwand 5' verschlossen werden kann. Eine (z.B. textile oder aus Kunststoff gefertigte) Zwischenwand 5‴ trennt wiederum den "Polsterkern" des länglichen Polsters vom Inhalt der Tasche 5. Alternativ könnte eine gesonderte Zwischenwand 5‴ aber auch entfallen, z.B. wenn der Polsterkern eine entsprechende Ausnehmung aufweist. Entlang der Seite F kann die Taschenaußenwand 5' unlösbar mit dem länglichen Polster verbunden sein und entlang der anderen Seite Z kann die Taschenaußenwand 5' z.B. mittels eines Reißverschlusses öffenbar ausgestaltet sein, um das Duftstoffträgermaterial I in die Tasche 5 einzubringen. Alternativ könnte auch die Seite F lösbar ausgeführt sein, sodass die Taschenaußenwand 5' auch vollständig vom Polster lösbar ist, insbesondere wenn an beiden Seiten F, Z Klettverschlüsse vorgesehen sind. In anderen Worten verschließt die Taschenaußenwand 5' die Taschenöffnung 6.

Figur 15 zeigt einen schematischen Querschnitt einer weiteren Krippeneinlage 1' in einer zweiten Variante mit einem kreisförmigen Querschnitt (wobei dieser auch eine andere Form einnehmen kann). Dabei liegt eine Tasche 5 analog zu Figur 8 vor. Mit anderen Worten ist die Tasche 5 als Durchgangsloch ausbildet, welches auf einer Seite z.B. permanent durch die Taschenaußenwand 5' verschlossen sein kann und auf der anderen Seite z.B. lösbar durch die Wand 5" verschlossen ist, sodass dort die Taschenöffnung 6 vorliegt. Wie bereits oben ausgeführt, wird hierbei eine im Wesentlichen zylindrische Zwischenwand 5‴ mit beliebigem Querschnitt vorliegen.

Neben den Ausführungsformen der Figuren 14 und 15 ist jedoch auch eine zu Figur 6 analoge Variante bei einer Nestchenschlange möglich.

Die Maße der Krippeneinlage 1' der Figur 14 und Figur 15 können wie folgt definiert sein: Umfang = 200 mm bis 400 mm und Gesamtlänge = 2000 mm bis 2700 mm. Das Maß M8, und dessen zugehörigen Komponenten (Duftasche 10, Taschenöffnung 6, Duftstoffträgermaterial) können gemäß der plattenartigen Ausführungsform der Krippeneinlage 1 definiert sein. Die aufgelisteten Werte können frei skaliert werden, um eine Krippeneinlage 1' für unterschiedliche große Kinderbetten und Kinder zu erhalten.

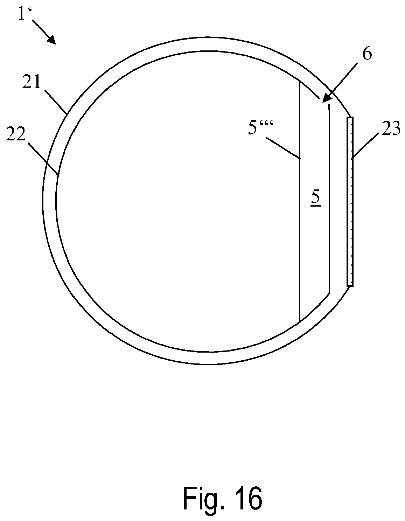

Eine besondere Variante zur Verwirklichung der Krippeneinlage 1' als Nestchenschlange ist in Figur 16 gezeigt. Hierbei umfasst die Krippeneinlage 1' einen Innenbezug 21 und einen Außenbezug 22. Der Innenbezug 21 kann hierbei als Berandungsteil 2, 3, 4 aufgefasst werden, da er die Tasche 5 zur Aufnahme des Duftstoffträgermaterials I bzw. des Duftbeutels 10 ausbildet. Der Innenbezug 21 weist weiters eine Zwischenwand 5‴ auf, welche die Tasche 5 vom Körper 11, d.h. der Polsterung, trennt. Die Polsterung kann auch hier permanent im Innenbezug 21 vorliegen. Die Taschenaußenwand 5', durch welche der Duft nach außen abgegeben werden soll, ist hierbei als lose vorliegendes Textil ausgeführt, sodass sich zwischen der Taschenaußenwand 5' und der Zwischenwand 5‴ ein Freiraum bildet, der die Tasche 5 darstellt. Die Taschenöffnung 6 ist hierbei ein Schlitz zwischen der Taschenaußenwand 5' und der Zwischenwand 5‴. Dadurch kann das Duftstoffträgermaterial I bzw. der Duftbeutel 10 einfach in die Tasche 5 eingeschoben werden, wenn sich der Außenbezug 22 nicht über dem Innenbezug 21 befindet. Nachdem das Duftstoffträgermaterial I bzw. der Duftbeutel 10 in die Tasche 5 eingebracht wurde, wird der Außenbezug 22 über den Innenbezug 21 gestülpt. Der Außenbezug 22 kann im einfachsten Fall eine homogene luftdurchlässige Außenfläche aufweisen, sodass der Duftstoff von der Tasche 5 durch die Taschenaußenwand 5' und danach durch die luftdurchlässige Außenfläche des Außenbezugs 22 strömen kann. Wie dargestellt kann der Außenbezug 22 jedoch auch eine vom Rest der Außenfläche des Außenbezugs 22 gesonderte Durchgangsfläche 23 aufweisen, welche den Durchtritt des Duftstoffes erleichtern soll und daher im Bereich der Taschenaußenwand 5' angeordnet wird. Weiters kann diese Durchgangsfläche 23 optisch anzeigen, aus welchem Bereich der Duftstoff austreten wird, sodass die Durchgangsfläche 23 eine Positionierhilfe bei der Anbringung im Bett darstellen kann. Die Durchgangsfläche 23 ist bevorzugt ein Netz. Ein derartiger Aufbau mit Innenbezug 21 und Außenbezug 22 kann auch in allen anderen hierin dargestellten Varianten zum Einsatz kommen.

Allgemein soll festgehalten sein, dass die Beschreibung der Krippeneinlage 1 der Figur 1 bis Figur 8 auch auf die Krippeneinlage 1' der Figuren 11 bis 15 übertragbar ist, mit dem Unterschied, dass die Berandungsteile 2, 3, 4 nicht plattenförmig ausgebildet sind. Insbesondere kann auch bei einer als Nestchenschlange ausgebildeten Krippeneinlage 1' die Taschenaußenwand 5' durch ein Netz gebildet sein.

Es kann erwähnt sein, dass auch eine Kombination aus plattenartigen Berandungsteilen 2, 3, 4 der Krippeneinlage 1 und Berandungsteile 2, 3, 4 gemäß der Krippeneinlage 1' gemeinsam innerhalb einer Krippeneinlage vorliegen können.

Die vorliegende Erfindung ist nicht auf die hierin beschriebenen und/oder abgebildeten Ausführungsformen beschränkt. Vielmehr umfasst die vorliegende Erfindung alle Ausführungsformen und Modifikationen, die in den Anwendungsbereich der Ansprüche fallen.

Alternativ zu den besprochenen Ausführungsformen könnte die Krippeneinlage 1, 1' aber auch als Bettbegrenzung für ein Tierbett oder ein anderes Bett eingesetzt werden, sodass die Krippeneinlage 1, 1' allgemeiner als Bettbegrenzung aufgefasst werden kann. Das Tierbett kann eine Auflagefläche umfassen, die mit der Bettbegrenzung optional auch dauerhaft verbunden sein kann, sodass das Tierbett als einstückiges Bett angeboten werden kann. Die Bettbegrenzung kann die Auflagefläche von allen Seiten oder auch nur von drei Seiten, d.h. U-förmig, begrenzen. Die Auflagefläche ist beispielsweise ein Textil, das z.B. mit der Bettbegrenzung vernäht ist. Die Auflagefläche kann beispielsweise aber auch mit Seitenwänden verbunden sein, an denen wiederum Bettbegrenzungen wie z.B. in den Figuren 9 und 10 gezeigt aufgehängt werden können.

## Patentansprüche

1. Bettbegrenzung, insbesondere Krippeneinlage (1; 1') für ein Kinderbett zum Schützen eines Kinderkopfes, umfassend zumindest ein Berandungsteil (2), bevorzugt drei in einer U-förmigen Konfiguration anordenbare gepolsterte Berandungsteile (2, 3, 4), **dadurch gekennzeichnet, dass** die Krippeneinlage (1; 1') zumindest eine in einem der Berandungsteile (2, 3, 4) angeordnete Tasche (5) zur Aufnahme eines Duftstoffträgermaterials (I) umfasst, wobei das Duftstoffträgermaterial (I) bevorzugt ein schlafförderndes Duftstoffträgermaterial (I) ist, insbesondere Kamille, Lavendel oder Zirbe,
wobei das Berandungsteil (2, 3, 4) eine an einer Außenseite des Berandungsteils (2, 3, 4) angeordnete Taschenaußenwand (5') zur Abgabe eines Duftes des Duftstoffträgermaterial (I) nach außen aufweist.

2. Bettbegrenzung nach Anspruch 1, umfassend eine Zwischenwand (5‴), welche den Innenraum der Tasche (5) vom restlichen Innenraum des jeweiligen Berandungsteils (2, 3, 4) abtrennt, insbesondere von einer Polsterung des Berandungsteils (2, 3, 4).

3. Bettbegrenzung nach Anspruch 1 oder 2, wobei drei plattenartige Berandungsteile (2, 3, 4) vorliegen, welche die U-förmige Konfiguration ausbilden.

4. Bettbegrenzung nach Anspruch 1 oder 2, wobei die Berandungsteile (2, 3, 4) jeweils längliche Polster sind und bevorzugt einen im Wesentlichen kreisförmigen, ovalen, dreieckigen oder rechteckigen Querschnitt aufweisen.

5. Bettbegrenzung nach einem der vorhergehenden Ansprüche, wobei die Taschenaußenwand (5') in der Innenseite der U-förmigen Konfiguration angeordnet ist.

6. Bettbegrenzung nach einem der vorhergehenden Ansprüche, wobei die Taschenaußenwand (5') als Netz ausgebildet ist.

7. Bettbegrenzung nach einem der vorhergehenden Ansprüche, wobei zumindest zwei, bevorzugt alle der Berandungsteile (2, 3, 4) eine Tasche (5) oder zwei Taschen (5) mit zugehöriger Taschenaußenwand (5') aufweisen.

8. Bettbegrenzung nach einem der vorhergehenden Ansprüche, ferner umfassend zumindest einen Duftbeutel (10), in dem das Duftstoffträgermaterial (I) eingebracht ist, wobei der Duftbeutel (10) bevorzugt durch zwei rundum verschließbare, besonders bevorzugt vernähte, flächige Textile ausgebildet ist.

9. Bettbegrenzung nach einem der vorhergehenden Ansprüche, wobei innerhalb eines der Berandungsteile (2, 3, 4) zumindest ein Luftverteilungskanal vorliegt, welcher an einem Ende mit der Tasche (5) und am anderen Ende an einer Stelle der Außenseite eines der Berandungsteile (2, 3, 4) vorliegt.

10. Bettbegrenzung nach einem der vorhergehenden Ansprüche, wobei die Tasche (5) über eine von der Taschenaußenwand (5') gesonderte Taschenöffnung (6) zugänglich ist, wobei die Taschenöffnung (6) bevorzugt an einer Schmalseite (S) des Berandungsteils angeordnet ist, wobei die Taschenöffnung (6) weiters bevorzugt mittels eines Reißverschlusses öffenbar und verschließbar ist.

11. Bettbegrenzung nach Anspruch 10, ferner umfassend eine zweite Öffnung, über welche eine Polsterung in die Bettbegrenzung bzw. in das Berandungsteil (2, 3, 4) einbringbar ist.

12. Kinderbett (100) umfassend eine als Krippeneinlage (1; 1') ausgeführte Bettbegrenzung nach einem der vorhergehenden Ansprüche, wobei die Krippeneinlage (1; 1') den Kopfbereich des Kinderbettes U-förmig umschließt und die Taschenaußenwand (5') zum Kopfbereich gerichtet ist.

13. Kinderbett (100) nach Anspruch 11, wobei die Krippeneinlage (1; 1') lösbar an einer oder mehreren Seitenwänden des Kinderbetts (100) verbunden ist.

14. Tierbett, insbesondere Hundebett, umfassend eine Bettbegrenzung nach einem der Ansprüche 1 bis 11 und eine Auflagefläche, wobei die Bettbegrenzung die Auflagefläche U-förmig oder vollständig umschließt und die Taschenaußenwand (5') zur Auflagefläche gerichtet ist.
